# FASCICULE DE BREVET EUROPEEN

(11) **EP 3 325 272 B1**
(45) Date de publication et mention de la délivrance du brevet: **21.08.2019**
(21) Numéro de dépôt: 16753945.1
(22) Date de dépôt: 21.07.2016
(51) Int. Cl.: B32B 27/28, B65D 65/40, C08L 23/08

(54) **COMPOSITION THERMOPLASTIQUE DE LIANT DE COEXTRUSION VERSATILE ET STRUCTURE MULTICOUCHE INCLUANT CETTE COMPOSITION**
VIELSEITIGE THERMOPLASTISCHE KOEXTRUSIONSBINDERZUSAMMENSETZUNG UND MEHRSCHICHTIGE STRUKTUR MIT DIESER ZUSAMMENSETZUNG
VERSATILE COEXTRUSION BINDER THERMOPLASTIC COMPOSITION AND MULTILAYER STRUCTURE INCLUDING SAID COMPOSITION

(30) Priorité: 21.07.2015 FR 1556887
(43) Date de publication de la demande: 30.05.2018
(73) Titulaire: Arkema France, 92700 Colombes (FR)
(72) Inventeur: COCQUET, Clio, 27300 Bernay (FR); DEVISME, Samuel, 76000 Rouen (FR); QUINEBECHE, Sébastien, 27300 Bernay (FR)
(74) Mandataire: Gorintin, Sarah
(86) Numéro de dépôt international: PCT/FR2016/051901
(87) Numéro de publication internationale: WO 2017/013372

(56) Documents cités:
- EP-A1- 0 326 775
- WO-A1-2006/132452
- FR-A1- 2 717 487

## Description

### Domaine de l'invention

L'invention a pour objet une composition thermoplastique de liant de coextrusion versatile constituée par un mélange associant, dans des proportions déterminées, au moins un copolymère d'acétate de vinyle particulier à au moins un terpolymère spécifique.

Elle se rapporte également à une structure multicouche dans laquelle une des couches centrales ou intermédiaires comprend cette composition de liant de coextrusion versatile et sa structure multicouche incluant cette composition.

### Etat de l'art

Classiquement, les emballages sont aujourd'hui des matériaux multicouches réalisés par coextrusion de film « cast » ou soufflage de gaine. Chaque couche apporte sa contribution aux performances de l'emballage, performances qui seraient inatteignables avec un seul matériau. On peut citer par exemple les matériaux barrières comme le copolymère d'éthylène et d'alcool vinylique (EVOH) ou le polyamide (PA) ou les matériaux constituants la couche mécanique comme le polyéthylène (PE), le polypropylène (PP), le polystyrène (PS)...

Les différents matériaux utilisés dans un emballage multicouche n'ont généralement aucune affinité entre eux car ils présentent des natures trop différentes (par exemple les matériaux polaires comme l'EVOH et apolaires comme le PE) et l'association de ces couches seules (sans composition de scellage) entrainerait une délamination spontanée de l'emballage.

C'est pourquoi, entre les couches constituant l'emballage, il est nécessaire d'utiliser un liant de scellage, également dénommé liant de coextrusion, qui consiste en un matériau ayant une affinité, et donc une adhésion, relativement satisfaisante avec les différents autre éléments ou couches formant l'emballage. Néanmoins, le seul critère d'affinité théorique n'est absolument pas suffisant pour déterminer une composition de liant susceptible d'être utilisée sur des supports de natures chimiques très différentes.

On connaît ainsi dans l'état de la technique plusieurs types de formulation de liants de coextrusion.

Les polyoléfines greffées anhydride maléique permettent d'obtenir de l'adhésion entre des polyoléfines et des matériaux polaires barrières comme le PA et l'EVOH. Notamment les documents US4440911, US5744250, US4397916 décrivent de telles polyoléfines greffées et de telles structures multicouches. Ces formulations ne permettent pas d'associer d'autres types de matériaux comme le polystyrène (PS) ou le polyéther téréphtalate d'éthylène (PET).

Des formulations contenant des polyoléfines greffées anhydride maléique et des polymères styréniques comme le PS ou le styrène-butadiène-styrène (SBS) permettent quant à elles d'obtenir de la cohésion entre des polyoléfines et/ou de l'EVOH et/ou du PS. Notamment les documents US20080039583, US20070071988, EP1400566, EP0816460 décrivent de telles formulations et applications. Ces formulations ne permettent néanmoins pas d'associer du PET à de l'EVOH ou du PS.

Un dernier type de formulations de liant de coextrusion est à base de copolymère éthylène/vinyle acétate greffé anhydride maléique. Ces formulations permettent d'obtenir de l'adhésion avec l'EVOH, le PS et le PET. Notamment les documents US4861676 et US4358557 décrivent de telles formulations. Par contre, ce type de formulation, lors de la coextrusion avec l'EVOH, génère une coloration rose de l'emballage, ce qui n'est pas acceptable.

Ainsi, il n'existe pas à l'heure actuelle une composition de liant (apte à être (co)extrudée), à la fois transparente et permettant d'assurer une bonne fixation entre ou sur des couches en EVOH, PS et/ou PET.

### Résumé de l'invention

Après diverses expérimentations et essais, la demanderesse a découvert qu'une association de deux polyoléfines, dans des proportions bien déterminées, d'un type bien particulier d'EVA et d'une classe spécifique de terpolymère permet d'obtenir un mélange transparent présentant des propriétés très satisfaisantes en coextrusion avec l'EVOH, PS et/ou PET.

Par ailleurs, la processabilité de cette composition est très aisée de sorte que son extrusion ou coextrusion sur ces matériaux se réalise sans aucune difficulté.

Ainsi, la présente invention se rapporte à une composition comprenant :
- 70% à 90% en masse de copolymère d'éthylène et d'acétate de vinyle par rapport à la masse de ladite composition, l'acétate de vinyle représentant entre 15% et 40% en masse dudit copolymère, et
- 10% à 30% en masse de terpolymère :
   - d'éthylène ;
   - d'acrylate d'éthyle, d'acrylate de méthyle, d'acétate de vinyle ou des mélanges de ceux-ci ;
   - d'anhydride maléique ;
   par rapport à la masse de ladite composition.

La présente invention se rapporte également à une composition thermoplastique transparente de scellage, consistant en un mélange de deux composants :
- le premier composant, présent à hauteur de 70% à 90% en masse dudit mélange, consistant en un ou plusieurs copolymères d'éthylène et d'acétate de vinyle représentant entre 15% et 40% en masse d'acétate de vinyle et présentant un indice de fluidité (MFI) compris entre 1 et 35 g/10min (190°C, 2,16kg, ASTM D 1238), et
- le second composant, présent à hauteur de 10% à 30% en masse dudit mélange, consistant en un ou plusieurs terpolymères d'éthylène - d'acrylate d'éthyle/acrylate de méthyle ou d'acétate de vinyle - d'anhydride maléique.

D'autres caractéristiques ou modes de réalisation de l'invention sont présentées ci-après :
- de préférence, dans le premier composant ou copolymère, l'acétate de vinyle représente entre 20% et 30% en masse dudit composant/copolymère, de préférence entre 23 et 27% en masse dudit composant/copolymère ;
- avantageusement, le premier composant/copolymère présente un indice de fluidité compris entre 1 et 35 g/10min, de préférence entre 1 et 25 g/10min, et encore préférentiellement entre 5 et 25 g/10min (190°C, 2,16kg, ASTM D 1238) ;
- avantageusement, le premier composant/copolymère a une masse moléculaire moyenne en poids comprise entre 20000 à 65000 g/mol, préférentiellement comprise entre 25000 et 50000 g/mol ;
- de préférence, le second composant/terpolymère est présent dans le mélange/représente entre 15% et 22% en masse du mélange/de ladite composition;
- avantageusement, dans le second composant/terpolymère, l'anhydride maléique est présent/représente entre 0,1% et 5% en masse dudit composant/dudit terpolymère ;
- avantageusement, le second composant/terpolymère présente un indice de fluidité (MFI) compris entre 1 et 30 g/10min (190°C, 2,16kg, ASTM D 1238), préférentiellement 10 et 20 g/10min ;
- de préférence, ladite composition est transparente.

L'invention concerne également une structure multicouche, comprenant au moins trois couches adjacentes, les couches supérieure et inférieure étant constituées de polystyrène, d'un copolymère d'éthylène et d'alcool vinylique et/ou de polyéther téréphtalate d'éthylène et la couche centrale comprend une composition telle que mentionnée ci-dessus.

### Description détaillée de l'invention

S'agissant du premier composant/copolymère, il s'agit d'un copolymère d'éthylène et d'acétate de vinyle (EVA) bien connu de l'homme du métier.

Plus précisément, il s'agit d'un tel EVA dans lequel l'acétate de vinyle représente entre 15% et 40%, de préférence entre 20% et 30%, et encore préférentiellement entre 25 et 30% en masse (dans ce document, les termes « masse » et « poids » sont utilisés indifféremment et ont la même signification) d'acétate de vinyle. De préférence, ledit premier composant/copolymère présente un indice de fluidité (MFI) compris entre 1 et 35 g/10min (190°C, 2,16kg, ASTM D 1238), de préférence entre 1 et 25 g/10min, et encore préférentiellement entre 5 et 25 g/10min.

De préférence, ledit premier composant/copolymère présente un indice de fluidité (MFI) compris entre 1 et 35 g/10min (190°C, 2,16kg, ASTM D 1238), de préférence entre 1 et 25 g/10min, et encore préférentiellement entre 5 et 25 g/10min et comprend entre 15% et 40%, de préférence entre 20% et 30%, et encore préférentiellement entre 25 et 30% en masse d'acétate de vinyle.

Le MFI (Melt Flow Index) a été effectué à l'aide d'un plastomètre à extrusion à poids selon la Norme ASTM D 1238, à une température de 190°C et sous un poids de 2,16 kg. Le résultat est exprimé en grammes/10 minutes.

De préférence, l'éthylène représente entre 60% et 85%, de préférence entre 70% et 80%, et encore préférentiellement entre 70 et 75% en masse du premier composant/copolymère.

S'agissant du second composant/terpolymère, il s'agit d'un terpolymère:
- d'éthylène
- d'acrylate d'éthyle, d'acrylate de méthyle ou acétate de vinyle, ou d'un mélange de ceux-ci ;
- d'anhydride maléique.

Ainsi, ce terpolymère pourra en particulier être choisi dans le groupe constitué par :
- un terpolymère ethylène - acrylate d'éthyle - anhydride maléique ;
- un terpolymère éthylène - acrylate de méthyle - anhydride maléique ; et
- un terpolymère éthylène - acétate de vinyle - anhydride maléique.

Avantageusement, ce terpolymère présente une quantité d'anhydride maléique comprise entre 0,1% et 5%, de préférence entre 1 et 3% en masse dudit terpolymère.

De préférence, ledit terpolymère présente un MFI compris entre 1 et 30, préférentiellement 10 et 20 g/10min (190°C, 2,16kg, ASTM D 1238).

Avantageusement, ledit terpolymère présente une quantité d'éthylène comprise entre 60 et 85%, de préférence entre 70 et 85%, encore préférentiellement entre 73 et 83% en masse dudit terpolymère. Avantageusement, ledit terpolymère présente une quantité d'acrylate d'éthyle, d'acrylate de méthyle ou d'acétate de vinyle ou d'un mélange de ceux-ci comprise entre 10 et 35%, de préférence entre 12 et 25% en masse du terpolymère.

Avantageusement, ledit terpolymère présente une quantité d'anhydride maléique comprise entre 0,1% et 5%, de préférence entre 1 et 3% en masse dudit terpolymère et présente un MFI compris entre 1 et 30, préférentiellement 10 et 20 g/10min (190°C, 2,16kg, ASTM D 1238).

La composition de l'invention peut contenir en outre d'autres additifs, tels que des agents anti-bloquants, glissants, antioxydants, des charges, des pigments, des colorants et des agents dits « processing aid », pour faciliter la mise en oeuvre de cette composition en extrusion-couchage ou extrusion-lamination. Certains de ces additifs peuvent être introduits dans la composition sous forme de mélanges-maîtres.

Selon un autre aspect, la présente invention se rapporte à une structure multicouche comprenant :
- au moins une couche d'une composition telle que définie ci-dessus, et
- au moins une couche, de préférence au moins deux couches d'un support, ledit support étant de préférence sélectionné dans le groupe constitué par un copolymère d'éthylène et d'alcool vinylique, le polyéther téréphtalate d'éthylène, le polyamide, le polyéthylène, le polypropylène et le polystyrène.

De préférence, ladite structure multicouche comprend au moins trois couches adjacentes, les couches supérieure et inférieure étant constituées d'un support identique ou différent tel que défini ci-dessus et la couche centrale comprenant la composition selon l'invention.

De préférence, lesdites couches supérieure et inférieure sont constituées d'un support différent.

De préférence, ledit support est sélectionné dans le groupe constitué par le polystyrène, un copolymère d'éthylène et d'alcool vinylique, un polyéther téréphtalate d'éthylène et des mélanges de ceux-ci.

Plus précisément, chacune des couches de la structure multicouche selon l'invention peut comprendre les additifs habituels incluant les plastifiants, les stabilisants, les antioxydants, les agents d'absorption du rayonnement ultraviolet, les stabilisants hydrolytiques, les agents antistatiques, les colorants ou les pigments, les charges, les produits ignifuges, les lubrifiants, les agents glissants, les agents antibloquants, les agents de renfort tels que la fibre de verre et les flocons, les auxiliaires de transformation, par exemple les agents de démoulage, et/ou les mélanges de ceux-ci.

De préférence, ladite structure multicouche présente une épaisseur comprise entre 50 et 800 µm (microns), de préférence entre 150 et 550 µm, et encore préférentiellement entre 120 et 400 µm.

Selon un autre aspect, la présente invention se rapporte à l'utilisation d'une composition telle que définie ci-dessus en tant que liant de scellage.

On entend par « liant de scellage » ou « liant de coextrusion », un matériau présentant une bonne affinité avec les autres éléments ou couches qui l'entourent.

De préférence, on considèrera qu'un matériau peut être considéré comme liant de scellage s'il permet d'obtenir une mesure d'adhésion supérieure à 2N/15mm pour un test de pelage à 90°C effectué à 50 mm/min avec un dynamomètre Zwick 1445.

Selon un autre aspect, la présente invention se rapporte à l'utilisation de ladite composition pour la préparation d'une structure multicouche, ladite structure multicouche comprenant la composition selon la présente invention et de préférence au moins une couche d'un support, ledit support étant de préférence sélectionné dans le groupe constitué par : un copolymère d'éthylène et d'alcool vinylique, le polyéther téréphtalate d'éthylène, le polyamide, le polyéthylène, le polypropylène et le polystyrène.

Selon un autre aspect, la présente invention se rapporte à un procédé de préparation de la composition telle que définie ci-dessus, comprenant une étape de mélange dudit copolymère et dudit terpolymère.

De préférence, ladite étape de mélange est réalisée par extrusion dudit copolymère et dudit terpolymère.

Le premier et le second composant sont obtenus selon un procédé bien connu de l'homme du métier et leur mélange pour obtenir la composition de scellage est également bien maîtrisé.

A titre d'exemple, on peut utiliser les procédés dits de polymérisation radicalaire fonctionnant habituellement à des pressions entre 200 et 2 500 bars. Ces procédés sont mis en oeuvre industriellement en utilisant deux types principaux de réacteurs : un réacteur de type autoclave ou un réacteur de type tubulaire. Ces procédés de polymérisation connus de l'homme du métier et on peut utiliser par exemple les procédés décrits dans les documents FR2498609, FR2569411 et FR2569412. L'homme du métier sait dans quelles proportions utiliser chacun des monomères pour obtenir le copolymère (a) utilisé dans l'invention.

De tels copolymères sont notamment commercialisés par la demanderesse sous la marque EVATANE®, OREVAC® ou LOTADER®.

Selon un autre aspect, la présente invention se rapporte à un procédé de préparation de la structure multicouche selon l'invention comprenant une étape de revêtement par un procédé choisi dans le groupe constitué par l'extrusion-couchage, l'extrusion-lamination et la coextrusion d'au moins deux couches de ladite structure multicouche.

Le procédé de revêtement par extrusion est bien connu de l'homme du métier, néanmoins à titre d'exemple non limitatif, une présentation de cette technique est donnée ci-après.

Le procédé de revêtement par extrusion permet de revêtir un substrat avec des couches polymères en un état fondu. Les polymères sous la forme de pastilles sont transportés dans la trémie des extrudeuses. Les extrudeuses fondent le polymère et développent une certaine pression pour le forcer à travers une filière. La masse fondue des différents polymères se fond dans le bloc d'alimentation ou directement dans la filière plate. Les conduites de production d'enrobage par coextrusion ont habituellement deux ou trois extrudeuses qui fournissent les masses fondues de polymère au niveau de la même filière. Le flux fondu quittant la filière est étiré par deux cylindres formant l'écartement : un cylindre refroidisseur et un cylindre revêtu de caoutchouc. L'épaisseur totale des polymères dans l'écartement est typiquement comprise entre 15 microns et 50 microns. Le polymère est pressé sur le substrat dans l'écartement pour développer l'adhérence, refroidi par le cylindre refroidisseur et solidifié. Le substrat qui est déroulé d'un cylindre peut être traité à la flamme, traité par un procédé corona ou apprêté avant de rentrer dans l'écartement où il est revêtu par le flux de masse fondue. Les vitesses typiques des conduites se situent entre 100 et 300 m/min (mètre par minute).

### EXEMPLES

### Exemples de compositions testées

Dans la suite, il est présenté des exemples de composition selon l'art antérieur et selon l'invention afin de tester l'adhésion de ces compositions sur des supports EVOH, PS et PET et déterminer la transparence de la composition en question.

### Matières premières des compositions testées :

EVA 1 : copolymère d'éthylène et d'acétate de vinyle comprenant 33% en masse d'acétate de vinyle. L'indice de fluidité est de 20 g/10min (190°C, 2,16kg, ASTM D 1238).
EVA 2 : copolymère d'éthylène et d'acétate de vinyle comprenant 28% en masse d'acétate de vinyle. L'indice de fluidité est de 5 g/10min (190°C, 2,16kg, ASTM D 1238).
EVA 3 : copolymère d'éthylène et d'acétate de vinyle comprenant 28% en masse d'acétate de vinyle. L'indice de fluidité est de 25 g/10min (190°C, 2,16kg, ASTM D 1238).
EVA 4 : copolymère d'éthylène et d'acétate de vinyle comprenant 28% en masse d'acétate de vinyle. L'indice de fluidité est de 50 g/10min (190°C, 2,16kg, ASTM D 1238).
EVA 5 : copolymère d'éthylène et d'acétate de vinyle comprenant 10% en masse d'acétate de vinyle. L'indice de fluidité est de 20 g/10min (190°C, 2,16kg, ASTM D 1238).
EVA 6 : copolymère d'éthylène et d'acétate de vinyle comprenant 45% en masse d'acétate de vinyle. L'indice de fluidité est de 20 g/10min (190°C, 2,16kg, ASTM D 1238.

Terpolymère ethylène - acrylate d'éthyle - anhydride maléique : Lotader® 3430 comprenant 15% en masse d'acrylate d'éthyle et 3,1% en masse d'anhydride maléique. L'indice de fluidité est de 6 g/10min (190°C, 2,16kg, ASTM D 1238).

Terpolymère éthylène - acrylate de méthyle - anhydride maléique : Lotader® 4503 comprenant 20% en masse d'acrylate de méthyle et 0,3% en masse d'anhydride maléique. L'indice de fluidité est de 8 g/10min (190°C, 2,16kg, ASTM D 1238).

Terpolymère éthylène - acétate de vinyle - anhydride maléique : Orevac® T 9304 comprenant 25% en masse d'acétate de vinyle et 1600ppm au minimum d'anhydride maléique. L'indice de fluidité est compris entre 5,5 et 9,3 g/10min (190°C, 2,16kg, ASTM D 1238).

EVOH : EVASIN® de la société Chang Chu Petrochemical
PS : Polystyrène 7240 de la société Total.
PET : Ramapet N180 de la société Indorama.
SBS : D1155 fourni par la société Kraton. Son taux de styrène est d'environ 40% en poids et son taux de di-block est inférieur à 1%.
LLDPE (polyéthylène à basse densité linéaire) : 318BE fourni par la société SABIC. Sa densité est de 0,918 (ASTM D 1505) et son indice de fluidité est de 3 g/10min (190°C, 2,16kg, ASTM D 1238).
LLDPE1 greffé AM : Orevac® 18370 présentant une densité de 0,910 (ASTM D 1505) et un indice de fluidité est de 2 g/10min (190°C, 2,16kg, ASTM D 1238).
LLDPE2 greffé AM : Orevac® 18910 présentant une densité de 0,950 (ASTM D 1505) et un indice de fluidité est de 1,5 g/10min (190°C, 2,16kg, ASTM D 1238). Le LLPDE2 greffé AM comprend par ailleurs éventuellement une quantité de SBS (Styrène-Butadiène-Styrène) de 10 % à 70 %.
EVA greffé AM : Orevac® 18211 présentant une densité est de 0,950 (ASTM D 1505) et un indice de fluidité est de 3,5 g/10min (190°C, 2,16kg, ASTM D 1238).

Les compositions testées sont présentés ci-dessous (les % s'entendent en poids relative de la composition) :
Composition n°1 : 100% en poids de LLDPE1 greffé AM
Composition n°2 : 100 % en poids de LLDPE2 greffé AM (absence totale de SBS)
Composition n°3 : 100 % en poids de LLDPE2 greffé AM (dont 10 % en poids de SBS)
Composition n°4 : 100 % en poids de EVA2 greffé anhydride maléique (les greffons AM représentent moins de 1% en poids)
Composition n°5 : 80 % en poids de EVA4 + 20 % en poids de Orevac® T
Composition n°6 : 80 % en poids de EVA5 + 20 % en poids de Orevac® T
Composition n°7 : 80 % en poids de EVA6 + 20 % en poids de Orevac® T
Composition n°8 (selon l'invention) : 80 % en poids de EVA1 + 20 % en poids de Orevac®
Composition n°9 (selon l'invention) : 80 % en poids de EVA3 + 20 % en poids de Orevac®
Composition n°10 (selon l'invention) : 80 % en poids de EVA2 20 % en poids de Lotader® 3430
Composition n°11 (selon l'invention) : 80 % en poids de EVA2 + 20 % en poids de Lotader® 4503
Composition n°12 (selon l'invention) : 80 % en poids de EVA2 + 20 % en poids de Orevac®

Bien entendu, seul un nombre limité de compositions testées sont présentées ici, par souci de concision, mais la demanderesse a réalisé de nombreux autres compositions et tests afin de lui permettre d'identifier la composition selon l'invention, y compris dans ses modes préférés de réalisation.

### Réalisation des films :

Les films multicouches sont obtenus par coextrusion de granulés des différentes compositions et de granulés d'EVOH (Ethylène vinyle alcool), PS (Polystyrène) ou PET (Polyéther téréphtalate). Ces différents films bi-couches multicouches sont utilisés pour réaliser le test d'adhésion.

Les structures réalisées sont les suivantes :

### 1. Evaluation de l'adhérence des liants PE sur EVOH

*PE* / *Liant* / *EVOH* / *Liant* / *PE*
*80 µm* / *10 µm* / *10µm* / *10 µm*/ *20 µm*

### 2. Evaluation de l'adhérence des liants PE sur PS

*PE* / *Liant* / *PS*
*80 µm* / *10 µm* / *50µm*

### 3. Evaluation de l'adhérence des liants PE sur PET

*PE* / *Liant* / *PET*
*50 µm* / *10 µm* / *70µm*

La coextrusion est réalisée à une température (filière et bloc de coextrusion) adaptée à la composition (280°C pour les structures PET et 230°C pour les structures PS). Cette extrusion permet l'obtention d'une bobine de film dont le tirage en sortie d'extrudeuse est réglé de façon à obtenir un film d'épaisseur comprise entre 120 et 550 µm (micromètre).

### Test d'adhésion :

Le niveau d'adhésion entre la composition testée et le support (PET, EVOH, PS) est mesuré à partir d'un test de pelage à 90° effectué à 50 mm/min (millimètre par minute) sur un dynamomètre Zwick 1445.

Les conditions de mesures sont les suivantes :
▪ Vitesse de déplacement de la traverse : 50 mm/min
▪ Largeur découpe éprouvette : 10 mm
▪ Angle de pelage : 90°

Le résultat d'adhésion est exprimé en N/15mm.

Les résultats sont présentés dans le tableau 1 ci-dessous.

Pour satisfaire aux exigences de l'invention, la mesure d'adhésion doit montrer un résultat supérieur à 2N/15mm (2 Newtons par 15 millimètres).

**Tableau 1**

| Composition n° | Adhésion sur PS (N/15 mm) | Adhésion sur PET (N/15 mm) | Adhésion sur EVOH (N/15 mm) | Coloration lors de la coextrusion avec EVOH | Transparence | Vague de coextrusion |
|---|---|---|---|---|---|---|
| 1 | 0 | 0 | 12 | NON | OUI | NON |
| 2 | 0 | 0 | 7 | NON | OUI | NON |
| 3 | 5 | 0 | 7 | NON | NON | NON |
| 4 | 2 | 5 | 2 | OUI | OUI | NON |
| 5 | 2,2 | 4,2 | 3 | NON | OUI | OUI |
| 6 | 2,5 | 6,3 | 2,1 | NON | OUI | OUI |
| 7 | 2,3 | 5,4 | 2,4 | NON | OUI | OUI |
| 8 | 2,9 | 6,5 | 3 | NON | OUI | OUI* |
| 9 | 2,8 | 6 | 3,2 | NON | OUI | OUI* |
| 10 | 3 | 7,5 | 4 | NON | OUI | NON |
| 11 | 3,3 | 7 | 4,5 | NON | OUI | NON |
| 12 | 3,2 | 7,8 | 5 | NON | OUI | NON |

| | | | | | | |
|---|---|---|---|---|---|---|
| * Légères vagues de coextrusion qui peuvent disparaitre en modifiant les paramètres de procédé (vitesse de ligne et/ou température). | | | | | | |

### Test de transparence :

Des films de 50 µm d'épaisseur des différentes compositions sont préparés par extrusion de film monocouche. La transparence de ces différents films est évaluée à l'oeil nu (une composition transparente est évaluée «OUI », une composition trouble est évaluée « NON») et reportée dans le Tableau 1 ci-dessus.

## Revendications

1. Composition comprenant :
- 70% à 90% en masse de copolymère d'éthylène et d'acétate de vinyle par rapport à la masse de ladite composition, l'acétate de vinyle représentant entre 15% et 40% en masse dudit copolymère, et
- 10% à 30% en masse de terpolymère :
- d'éthylène ;
- d'acrylate d'éthyle, d'acrylate de méthyle, d'acétate de vinyle ou d'un mélange de ceux-ci ;
- d'anhydride maléique
par rapport à la masse de ladite composition.

2. Composition selon la revendication 1, **caractérisée en ce que** l'acétate de vinyle représente entre 20% et 30% en masse dudit copolymère.

3. Composition selon la revendication 1 ou 2, **caractérisée en ce que** le copolymère présente un indice de fluidité compris entre 1 et 35 g/10min, de préférence entre 1 et 25 g/10min, et encore préférentiellement entre 5 et 25 g/10min (190°C, 2,16kg, ASTM D 1238).

4. Composition selon l'une des revendications 1 à 3, **caractérisée en ce que** le copolymère a une masse moléculaire moyenne en poids comprise entre 20000 à 65000 g/mol, préférentiellement comprise entre 25000 et 50000 g/mol.

5. Composition selon l'une des revendications 1 à 4, **caractérisée en ce que** ledit terpolymère représente entre 15% et 22% en masse de ladite composition.

6. Composition selon l'une des revendications précédentes, **caractérisée en ce que** l'anhydride maléique représente entre 0,1% et 5%, de préférence entre 1 et 3% en masse dudit terpolymère.

7. Composition selon l'une quelconque des revendications précédentes, **caractérisée en ce que** le terpolymère présente un indice de fluidité (MFI) compris entre 1 et 30 g/10min (190°C, 2,16kg, ASTM D 1238), préférentiellement 10 et 20 g/10min.

8. Structure multicouche comprenant :
- au moins une couche d'une composition telle que définie dans l'une des revendications 1 à 7, et
- au moins une couche, de préférence au moins deux couches d'un support, ledit support étant de préférence sélectionné dans le groupe constitué par un copolymère d'éthylène et d'alcool vinylique, le polyéther téréphtalate d'éthylène, le polyamide, le polyéthylène, le polypropylène et le polystyrène.

9. Structure multicouche selon la revendication 8, comprenant au moins trois couches adjacentes, les couches supérieure et inférieure étant constituées d'un support identique ou différent tel que défini dans la revendication 8 et la couche centrale comprend une composition selon l'une quelconque des revendications 1 à 7.

10. Structure multicouche selon l'une quelconque des revendications 8 ou 9, ayant une épaisseur comprise entre 50 et 800 µm, de préférence entre 120 et 550 µm, et encore préférentiellement entre 150 et 400 µm.

11. Utilisation d'une composition telle que définie dans l'une des revendications 1 à 7 en tant que liant de scellage.

12. Utilisation selon la revendication 11, pour la préparation d'une structure multicouche, ladite structure multicouche comprenant de préférence au moins une couche d'un support, ledit support étant de préférence sélectionné dans le groupe constitué par : un copolymère d'éthylène et d'alcool vinylique, le polyéther téréphtalate d'éthylène, le polyamide, le polyéthylène, le polypropylène et le polystyrène.

13. Procédé de préparation d'une composition selon l'une quelconque des revendications précédentes, comprenant une étape de mélange dudit copolymère et dudit terpolymère.

## Patentansprüche

1. Zusammensetzung, umfassend:
- 70 bis 90 Massen-% Copolymer von Ethylen und Vinylacetat, bezogen auf die Masse der Zusammensetzung, wobei das Vinylacetat zwischen 15 und 40 Massen-% des Copolymers ausmacht, und
- 10 bis 30 Massen-% Terpolymer von
- Ethylen,
- Ethylacrylat, Methylacrylat, Vinylacetat oder einer Mischung davon,
- Maleinsäureanhydrid,
bezogen auf die Masse der Zusammensetzung.

2. Zusammensetzung nach Anspruch 1, **dadurch gekennzeichnet, dass** das Vinylacetat zwischen 20 und 30 Massen-% des Copolymers ausmacht.

3. Zusammensetzung nach Anspruch 1 oder 2, **dadurch gekennzeichnet, dass** das Copolymer einen Schmelzindex zwischen 1 und 35 g/10 min, vorzugsweise zwischen 1 und 25 g/10 min und noch weiter bevorzugt zwischen 5 und 25 g/10 min (190 °C, 2,16 kg, ASTM D 1238) aufweist.

4. Zusammensetzung nach einem der Ansprüche 1 bis 3, **dadurch gekennzeichnet, dass** das Copolymer eine gewichtsmittlere Molmasse zwischen 20.000 bis 65.000 g/mol, vorzugsweise zwischen 25.000 und 50.000 g/mol, aufweist.

5. Zusammensetzung nach einem der Ansprüche 1 bis 4, **dadurch gekennzeichnet, dass** das Terpolymer zwischen 15 und 22 Massen-% der Zusammensetzung ausmacht.

6. Zusammensetzung nach einem der vorhergehenden Ansprüche, **dadurch gekennzeichnet, dass** das Maleinsäureanhydrid zwischen 0,1 und 5 Massen-%, vorzugsweise zwischen 1 und 3 Massen-%, des Terpolymers ausmacht.

7. Zusammensetzung nach einem der vorhergehenden Ansprüche, **dadurch gekennzeichnet, dass** das Terpolymer einen Schmelzindex (MFI) zwischen 1 und 30 g/10 min (190 °C, 2,16 kg, ASTM D 1238), vorzugsweise 10 und 20 g/10 min, aufweist.

8. Mehrschichtstruktur, umfassend:
- mindestens eine Schicht aus einer Zusammensetzung gemäß einem der Ansprüche 1 bis 7 und
- mindestens eine Schicht, vorzugsweise mindestens zwei Schichten, eines Trägers, wobei der Träger vorzugsweise aus der Gruppe bestehend aus einem Copolymer von Ethylen und Vinylalkohol, Polyetherethylenterephthalat, Polyamid, Polyethylen, Polypropylen und Polystyrol ausgewählt ist.

9. Mehrschichtstruktur nach Anspruch 8, umfassend mindestens drei benachbarte Schichten, wobei die obere und untere Schicht aus einem gleichen oder verschiedenen Träger gemäß Anspruch 8 bestehen und die zentrale Schicht eine Zusammensetzung nach einem der Ansprüche 1 bis 7 umfasst.

10. Mehrschichtstruktur nach einem der Ansprüche 8 oder 9 mit einer Dicke zwischen 50 und 800 pm, vorzugsweise zwischen 120 und 550 µm und noch weiter bevorzugt zwischen 150 und 400 µm.

11. Verwendung einer Zusammensetzung gemäß einem der Ansprüche 1 bis 7 als Versiegelungsbindemittel.

12. Verwendung nach Anspruch 11 zur Herstellung einer Mehrschichtstruktur, wobei die Mehrschichtstruktur vorzugsweise mindestens eine Schicht eines Trägers umfasst, wobei der Träger vorzugsweise aus der Gruppe bestehend aus einem Copolymer von Ethylen und Vinylalkohol, Polyetherethylenterephthalat, Polyamid, Polyethylen, Polypropylen und Polystyrol ausgewählt ist.

13. Verfahren zur Herstellung einer Zusammensetzung nach einem der vorhergehenden Ansprüche, umfassend einen Schritt des Mischens des Copolymers und des Terpolymers.

## Claims

1. Composition comprising:
- 70% to 90% by mass of ethylene-vinyl acetate copolymer relative to the mass of said composition, the vinyl acetate representing between 15% and 40% by mass of said copolymer, and
- 10% to 30% by mass of terpolymer:
- of ethylene;
- of ethyl acrylate, of methyl acrylate, of vinyl acetate or of a mixture thereof;
- of maleic anhydride
relative to the mass of said composition.

2. Composition according to Claim 1, **characterized in that** the vinyl acetate represents between 20% and 30% by mass of said copolymer.

3. Composition according to Claim 1 or 2, **characterized in that** the copolymer has a melt flow index between 1 and 35 g/10 min, preferably between 1 and 25 g/10 min, and more preferentially between 5 and 25 g/10 min (190°C, 2.16 kg, ASTM D 1238).

4. Composition according to any one of Claims 1 to 3, **characterized in that** the copolymer has a weight-average molecular mass between 20 000 and 65 000 g/mol, preferentially between 25 000 and 50 000 g/mol.

5. Composition according to any one of Claims 1 to 4, **characterized in that** said terpolymer represents between 15% and 22% by mass of said composition.

6. Composition according to any one of the preceding claims, **characterized in that** the maleic anhydride represents between 0.1% and 5%, preferably between 1 and 3% by mass of said terpolymer.

7. Composition according to any one of the preceding claims, **characterized in that** the terpolymer has a melt flow index (MFI) comprised between 1 and 30 g/10 min (190°C, 2.16 kg, ASTM D 1238), preferentially 10 and 20 g/10 min.

8. Multilayer structure comprising:
- at least one layer of a composition as defined in one of Claims 1 to 7, and
- at least one layer, preferably at least two layers of a support, said support preferably being selected from the group consisting of an ethylene-vinyl alcohol copolymer, polyether ethylene terephthalate, polyamide, polyethylene, polypropylene and polystyrene.

9. Multilayer structure according to Claim 8, comprising at least three adjacent layers, the upper and lower layers consisting of an identical or different support as defined in Claim 8 and the central layer comprises a composition according to any one of Claims 1 to 7.

10. Multilayer structure according to either one of Claims 8 and 9, having a thickness of between 50 and 800 pm, preferably between 120 and 550 µm, and more preferentially between 150 and 400 µm.

11. Use of a composition as defined in one of Claims 1 to 7 as sealing tie.

12. Use according to Claim 11, for the preparation of a multilayer structure, said multilayer structure preferably comprising at least one layer of a support, said support preferably being selected from the group consisting of: an ethylene-vinyl alcohol copolymer, polyether ethylene terephthalate, polyamide, polyethylene, polypropylene and polystyrene.

13. Process for preparing a composition according to any one of the preceding claims, comprising a step of mixing said copolymer and said terpolymer.
